# EUROPÄISCHE PATENTSCHRIFT

(11) **EP 2 700 523 B1**
(45) Veröffentlichungstag und Bekanntmachung des Hinweises auf die Patenterteilung: **14.03.2018**
(21) Anmeldenummer: 13180247.2
(22) Anmeldetag: 13.08.2013
(51) Int. Cl.: B60J 7/22

(54) **Windschottvorrichtung**
Wind deflector for cabriolet vehicle
Coupe-vent pour véhicule cabriolet

(30) Priorität: 23.08.2012 DE 102012107784
(43) Veröffentlichungstag der Anmeldung: 26.02.2014
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE)
(74) Vertreter: Schlief, Thomas P.

(56) Entgegenhaltungen:
- DE-A1- 4 315 139
- DE-A1- 19 705 271
- DE-A1-102006 041 948
- DE-A1-102011 052 140
- DE-C1- 3 914 035
- DE-T2- 69 208 073
- KR-B1- 100 803 311

## Beschreibung

Die Erfindung betrifft eine Windschottvorrichtung nach dem Oberbegriff des Anspruchs 1, wie aus der DE 10 2011 052 140 A1 bekannt. Solche Windschottvorrichtungen sind mittlerweile vielfältig bekannt. In der DE 10 2006 041 948 A1 ist beispielsweise eine Windschottvorrichtung beschrieben, bei der ein als Schwenkhebel ausgebildetes Aufrichtmittel an einem Profilelement vorgesehen ist, das aus einer Ruhestellung, in der es parallel zum Profilelement verläuft, in eine Aktivstellung verschwenkt wird. In der Aktivstellung steht das Aufrichtmittel vom Profilelement des Rahmens ab und ist dann senkrecht zur Flachmaterialbahn des Rahmens positioniert. Diese Konstruktion hat den Nachteil, dass die Bedienung des Aufrichtmittels relativ aufwändig ist. Außerdem sind die beweglichen Teile wenig robust und zudem teuer in der Herstellung.

Es ist Aufgabe der vorliegenden Erfindung, eine Windschottvorrichtung mit einem in der Bedienung einfachen sowie zugleich kostengünstigen Aufrichtmittel zur Verfügung zu stellen.

Diese Aufgabe wird durch eine Windschottvorrichtung mit den Merkmalen des Anspruchs 1 gelöst.

Die Erfindung bietet insbesondere den Vorteil, dass ein Bediener schnell und unkompliziert den Griffabschnitt des mindestens einen innerhalb des Rahmens angeordneten Aufrichtmittels ergreifen kann, ohne dass beispielsweise eine zusätzliche Schwenkbewegung notwendig wäre. Das Aufrichtmittel kann aufgrund der ergonomischen Anordnung und einfachen Bedienung intuitiv sogar während der Fahrt durch den Fahrer betätigt werden. Aufgrund des Verlaufs des Griffabschnitts in einem Winkel von nicht mehr als 10° gegenüber der im Rahmen eingespannten Flachmaterialbahn ist nicht nur ein hoher ergonomischer Bedienkomfort, sondern auch eine harmonische Einfügung des mindestens einen Aufrichtmittels in das Gesamtbild des Rahmens und somit der Windschottvorrichtung gegeben. Vorteilhaft dabei ist es auch, dass aufgrund des beschriebenen Verlaufs des Griffabschnitts dieser nur wenig von der Windschottvorrichtung absteht. Es besteht somit auch bei nahe hinter den Vordersitzen angeordneter Windschottvorrichtung ausreichend Freiraum für die Betätigung des mindestens einen Aufrichtmittels, so dass Kollisionen des Aufrichtmittels mit den Vordersitzen, welche dort zu Verschleißspuren führen können, vermieden werden. Erfindungsgemäß ist das mindestens eine Aufrichtmittel teilweise oder sogar ganz vom Rahmen - gesehen in der Seitenansicht - verdeckt, so dass keine Stoßgefahr für Fahrzeuginsassen oder eine Beschädigungsgefahr für Fahrzeuggegenstände gegeben ist. Auch ist dann das mindestens eine Aufrichtmittel beim Ein- oder Ausbau der Wind- schottvorrichtung in bzw. aus dem Fahrzeug nicht hinderlich, kann sich also z.B. nicht im Fahrzeug verhaken oder das Polster o.ä. verkratzen. Auch kann das Packmaß zum Verstauen in einer Tasche o.ä. klein gehalten werden.

Die Erfindung ist besonders vorteilhaft bei einer Windschottvorrichtung einsetzbar, welche weiterhin einen Unterrahmen aufweist, der ebenfalls aus wenigstens einem Rahmenelement und einer in dem Rahmen eingespannten Flachmaterialbahn aufgebaut ist. Der Rahmen ist dabei schwenkbar mit dem Unterrahmen verbunden, um aus seiner Ablagestellung, in welcher er zumindest teilweise auf den Unterrahmen abgelegt ist, in seine Gebrauchsstellung bei im Fahrzeug eingebauter Windschottvorrichtung überführt zu werden. Ebenso kann jedoch die Windschottvorrichtung auch nur einen Rahmen umfassen, der schwenkbar in dem Fahrzeug direkt gelagert ist. Beispielsweise kann der Rahmen im Bereich der Kopfstützen schwenkbar gelagert sein.

Der Rahmen der Windschottvorrichtung ist dabei aus wenigstens einem Rahmenelement aufgebaut, d.h. der Rahmen kann sowohl aus einem einzigen, umlaufenden Rahmenelement bestehen, als auch aus mehreren, hintereinander angeordneten Rahmenelementen, welche zu einem gesamten, umlaufenden Rahmen zusammengesetzt sind. Umfasst die Windschottvorrichtung einen Unterrahmen, so besteht dieser in analoger Weise ebenfalls aus wenigstens einem Rahmenelement.

Vorteilhaft ist es, wenn das wenigstens eine Aufrichtmittel durch direkten Zug in Richtung der Gebrauchsstellung des Rahmens betätigbar ist, da dies der intuitiven Betätigungsrichtung des Bedieners entspricht. Eine drückende Betätigung über ein hebelartig ausgebildetes Betätigungsmittel ist jedoch ebenfalls denkbar.

Nach einer ersten Ausführung der Erfindung ist das mindestens eine Aufrichtmittel starr mit der Flachmaterialbahn des Rahmens verbunden. Als Griffabschnitt kann dann zum Beispiel eine Ausnehmung in dem Aufrichtmittel angeordnet sein, in welche der Bediener eingreifen kann, um den Rahmen aus seiner Ablagestellung aufzurichten.

Gemäß einer besonders bevorzugten Ausführungsform erstreckt sich der besagte Griffabschnitt des mindestens einen Aufrichtmittels größtenteils oder sogar vollständig in einer Ebene, die parallel zur Ebene der im Rahmen eingespannten Flachmaterialbahn verläuft. Aufgrund dieses Parallelverlaufs wird eine homogene Optik erzielt; außerdem kann ein Bediener, der auf einem der Vordersitze sitzt, den Griffabschnitt innerhalb kürzester Zeit ergreifen, da er sich nach der Orientierung der Flachmaterialbahn richten kann und keine Winkelverläufe des Griffabschnitts relativ zur Flachmaterialbahn einkalkulieren muss. Auch der Fahrer kann das Aufrichtmittel daher problemlos vom Fahrersitz aus bedienen, ohne vom Verkehr abgelenkt zu werden.

Gemäß einer weiteren bevorzugten Ausführungsform der Erfindung ist das mindestens eine Aufrichtmittel an einem Querelement des Rahmens angeordnet, welches sich in y-Richtung des Fahrzeugs (Fahrzeugquerrichtung) erstreckt. An diesem Querelement ist gleichfalls das Schwenkscharnier von Unterrahmen und Rahmen angeordnet. Diese Platzierung des mindestens einen Aufrichtmittels hat den Vorteil, dass das Aufrichtmittel für den Bediener vom Fahrer- oder Beifahrersitz sehr günstig zu erreichen ist. Ist der Rahmen aus einem einzigen, umlaufenden Rahmenelement aufgebaut, so ist das mindestens eine Aufrichtmittel analog zu der beschriebenen Ausführung mit einem Querelement an einem Querabschnitt des Rahmens angeordnet.

Gemäß einer vorteilhaften Ausführungsform umfasst das mindestens eine Aufrichtmittel eine Aussparung in einem Rahmenelement des Rahmens. In diese Aussparung kann dann eine Bedienperson eingreifen, um den Rahmen aus der abgelegten Position hoch zu schwenken. Die Aussparung kann beispielsweise an einem der Längselemente des Rahmens, d.h. bei abgelegtem Rahmen in Fahrzeugslängsrichtung, vorgesehen sein, um die notwendigen Hebelkräfte für das Aufrichten des Rahmens aufbringen zu können.

Gemäß einer vorteilhaften Variante verbindet das mindestens eine Aufrichtmittel ein Querelement des Rahmens, das sich in y-Richtung des Fahrzeugs erstreckt, mit einem Längselement des Rahmens, das sich in Ablagestellung des Rahmens in x-Fahrzeugrichtung erstreckt. Beinhaltet der Rahmen nur ein einziges umlaufendes Rahmenelement, so verbindet das Aufrichtmittel in analoger Weise einen Querabschnitt des Rahmens mit einem Längsabschnitt des Rahmens.

Weiterhin ist es vorteilhaft, wenn das mindestens eine Aufrichtmittel als Steg ausgebildet ist, der zwei Rahmenelemente oder zwei Rahmenabschnitte des Rahmens miteinander verbindet. Besonders vorteilhaft ist es dabei, wenn der Steg ein Querelement des Rahmens mit einem seiner Längselemente miteinander verbindet, und zwar zusätzlich zu der Eckverbindung zwischen besagtem Querelement und Längselement. Das Querelement ist wiederum dasjenige, das sich in y-Richtung des Fahrzeugs erstreckt, wenn der Rahmen auf den Unterrahmen abgelegt ist. Entsprechend ist ein Längselement ein solches, das sich in Ablagestellung des Rahmens in x-Fahrzeugrichtung erstreckt. In analoger Weise sind wiederum bei einem Rahmen mit einem einzigen umlaufenden Rahmenelement Querabschnitte und Längsabschnitte definiert und durch einen entsprechenden Steg miteinander verbunden. Der besagte Steg dient als Griff, dessen beiden Enden mit einem Querelement bzw. einem Längselement verbunden sind. Es bietet sich hierbei an, wenn der Steg ganz umgriffen werden kann, d.h. der Steg ist mit Abstand zur Flachmaterialbahn des Rahmens oder lose an dieser anliegend angeordnet.

Gemäß einer weiteren vorteilhaften Ausführungsform erstreckt sich das mindestens eine starre Aufrichtmittel von einem Längselement bzw. einem Längsabschnitt des Rahmens zum anderen Längselement bzw. Längsabschnitt.

Nach einer anderen vorteilhaften Ausführung der Erfindung ist das wenigstens eine Aufrichtmittel entlang des wenigstens einen Rahmenelements um den gesamten Rahmen umlaufend ausgebildet. Das Aufrichtmittel kann dabei an den Rahmen angeformt sein oder auch durch ein zusätzliches Bauteil gebildet sein. Vorteilhaft bei dieser Ausführung ist es, dass ein sehr großer Griffbereich zur Verfügung steht und somit die Bedienung erleichtert ist.

Gemäß einer weiteren Alternative ist das mindestens eine Aufrichtmittel in Gebrauchsstellung des Rahmens aufwärts oder abwärts gebogen ausgebildet, ist also nicht linear ausgerichtet. Diese Form kann eine bessere Ergonomie für den Bediener bedeuten. Außerdem können diese gebogenen Abschnitte eine Luftleitfunktion übernehmen, wobei durch die Flachmaterialbahn von der Rückseite des Rahmens her durchtretende Luft beispielsweise nach oben oder unten geleitet werden kann. Auch kann das wenigstens eine Aufrichtmittel und/oder der Griffabschnitt des mindestens einen Aufrichtmittels derart gebogen sein, dass es hakenförmig ausgebildet ist und dadurch als Kleiderhaken o.ä. dienen kann.

Im Folgenden wird die Erfindung anhand von Zeichnungen näher erläutert. Es zeigen:
- **Fig. 1**: eine in einem PKW eingesetzte Windschottvorrichtung;
- **Fig. 2**: die Windschottvorrichtung gemäß der Fig. 1 außerhalb des PKWs in anderer perspektivischer Ansicht;
- **Fig. 3**: eine perspektivische Ansicht eines vom Unterrahmen hochgeschwenkten Rahmens mit einer ersten Ausführungsform eines Aufrichtmittels;
- **Fig. 4**: eine Ansicht wie in Fig. 3 mit einer zweiten Ausführungsform eines Aufrichtmittels;
- **Fig. 5**: eine Ansicht wie in Fig. 3 mit einer dritten Ausführungsform eines Aufrichtmittels;
- **Fig. 6**: eine Ansicht wie in Fig. 2 mit einer vierten Ausführungsform eines Aufrichtmittels;
- **Fig. 7**: eine Ansicht wie in Fig. 2 mit einer fünften Ausführungsform eines Aufrichtmittels;
- **Fig. 7a, b**: zwei Varianten zum Aufrichtmittel gemäß der Fig. 7 in Vorderansicht;
- **Fig. 7c**: eine Seitenansicht eines Aufrechtmittels gemäß einer weiteren Variante zum Aufrichtmittel gemäß Fig. 7;
- **Fig. 8**: eine Seitenansicht einer sechsten Ausführungsform eines Aufrichtmittels, das nicht Teil der Erfindung ist,
- **Fig. 9**: eine Seitenansicht einer siebten Ausführungsform eines Aufrichtmittels,
- **Fig. 10**: eine Ansicht wie in Fig. 2 mit einer achten Ausführungsform eines Aufrichtmittels,
- **Fig. 10a**: die Ausführungsform der Figur 10 in einer Querschnittdarstellung,
- **Fig. 11**: eine neunte Ausführungsform eines Aufrichtmittels in einer Vorderansicht,
- **Fig. 11a**: die Ausführungsform der Fig. 11 in einer Querschnittdarstellung,
- **Fig. 12**: eine Ansicht wie in Fig. 2 mit einer zehnten Ausführungsform der Erfindung, sowie
- **Fig. 13**: eine weitere Ausführungsform der Erfindung in einer Vorderansicht.

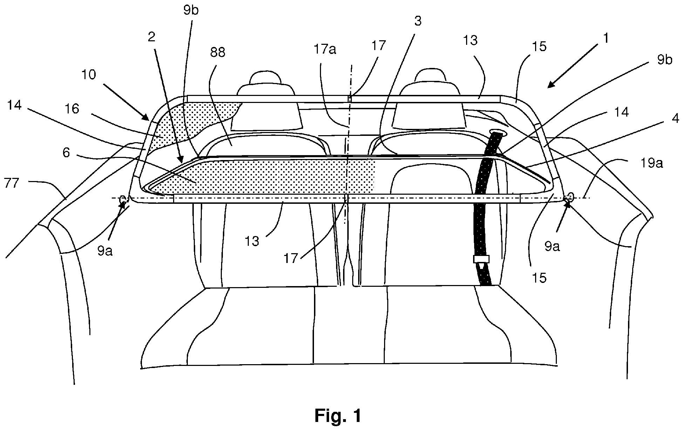

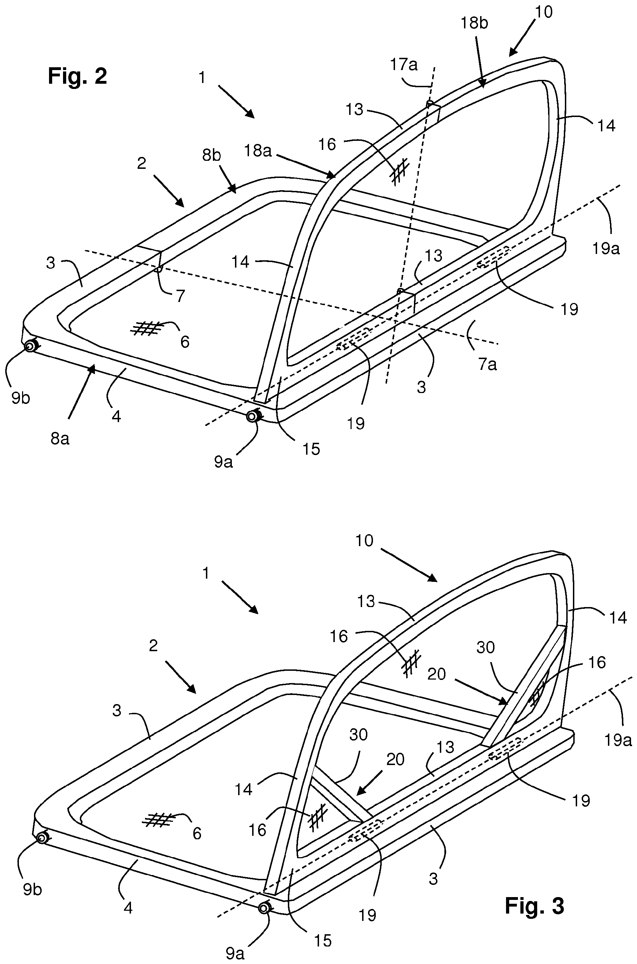

Eine Windschottvorrichtung 1 entsprechend der Fig. 1 und 2 umfasst einen Rahmen 10, der mittels eines länglichen (in Fig. 1 verdeckten, in Fig. 2 gestrichelt angedeuteten) Klappscharniers 19 um eine Klappachse 19a an einem Unterrahmen 2 schwenkbar angeordnet ist. Weiterhin umfasst die dargestellte Windschottvorrichtung einen Unterrahmen 2, welcher einerseits der Befestigung der Windschottvorrichtung 1 in dem nur teilweise dargestellten Personenkraftfahrzeug dient, andererseits einen Teilbereich einer Fahrgastraumöffnung des Fahrzeugs abdeckt. Der Unterrahmen 2 erstreckt sich im Wesentlichen parallel zu einer Gürtellinie 77 des Kraftfahrzeugs bis hin zu den Lehnen der Rücksitze 88. Der Raum unterhalb des Unterrahmens 2 kann somit als Stauraum genutzt werden. Es ist jedoch ebenfalls möglich, dass die Windschottvorrichtung 1 lediglich einen einzigen Rahmen 10 umfasst, der schwenkbar in dem Fahrzeug gelagert ist.

Das zweigeteilte Klappscharnier 19a ist an Querelementen 3 bzw. 13 des Unterrahmens 2 bzw. des Rahmens 10 angebracht. Die Querelemente 3 bzw. 13 erstrecken sich quer zur Fahrzeuglängsrichtung (y-Richtung) und sind über Eckelemente 5 bzw. 15 mit Längselementen 4 bzw. 14, die sich in Aufsicht gesehen in Fahrzeuglängsrichtung (x-Richtung) erstrecken, verbunden.

In den Fig. 1 und 2 ist der Rahmen 10 aufgeklappt in Gebrauchsposition dargestellt und erstreckt sich hierbei im Wesentlichen über die Breite des Insassenraums, wobei er nahezu senkrecht hinter den hier nicht dargestellten Kopfstützen der Vordersitze positioniert ist.

Zur Befestigung der Windschottvorrichtung 1 in dem Fahrzeug weist es vordere und hintere Fixiereinrichtungen 9a, 9b auf, mittels welcher der Unterrahmen 2 in dem Fahrzeug fixiert wird. Diese können beispielsweise als ausfahrbare oder starre Stifte ausgebildet sein.

Der Unterrahmen 2 sowie auch der Rahmen 10 sind weitgehend steif ausgebildet. In beiden Rahmen 2 bzw. 10 ist jeweils eine Flachmaterialbahn 6 bzw. 16 aufgespannt, welche aus Gründen der Übersichtlichkeit nur zum Teil angedeutet sind. Die Flachmaterialbahnen 6, 16 sind beispielsweise windabweisend ausgeführt, können jedoch auch aus einem luftdurchlässigen Material wie einem Netz oder Gewirke hergestellt sein. Bei einer nicht dargestellten Variante der Windschottvorrichtung 1 ist nicht einerseits im Unterrahmen 2 und andererseits im Rahmen 10 jeweils eine Flachmaterialbahn 6, 16 eingebaut, sondern es ist vielmehr ein und dieselbe Flachmaterialbahn sowohl im Unter- als auch im Rahmen 2, 10 eingespannt, was durch entsprechende Einfassung der Flachmaterialbahn in den beiden Rahmen 2, 10 ohne Weiteres realisierbar ist.

Um die Windschottvorrichtung 1 bei Nichtgebrauch platzsparend verstauen zu können, weisen sowohl der Unterrahmen 2 als auch der Rahmen 10 jeweils mittig zwei Schwenkscharniere 7 bzw. 17 auf. Die Schwenkscharniere 7 definieren eine Schwenkachse 7a, während die Schwenkscharniere 17 eine Schwenkachse 17a definieren. Hierdurch ist der Unterrahmen 2 durch die Schwenkachse 7a in zwei Teilrahmen 8a, 8b unterteilt, während der Windschottrahmen 10 durch die Schwenkachse 17a in zwei Teilrahmen 18a, 18b unterteilt ist (s. Fig. 2). Nach Abklappen des Rahmens 10 auf den Unterrahmen 2 kann die Windschottvorrichtung 1 - wenn sie von dem Fahrzeug getrennt wurde - noch einmal gefaltet werden, so dass sie insgesamt zweifach faltbar ist. Hierbei können die Achsen 7a, 17a zusammen fallen. Es existieren aber auch Windschottvorrichtungen mit beispielsweise einem Doppelgelenk 17 im Rahmen 10, so dass die Achsen 7a, 17a im zweifach gefalteten Zustand der Windschottvorrichtung 1 nicht zusammen fallen, sondern parallel und mit Abstand zueinander verlaufen.

Die in den Fig. 3 - 9 dargestellten Windschottvorrichtungen 1 sind der Einfachheit halber ohne Schwenkgelenke 7, 17 dargestellt, d.h. es ist lediglich der Rahmen 10 zum Unterrahmen 2 verschwenkbar. Tatsächlich lässt sich die Erfindung aber selbstverständlich sowohl bei einfach sowie zweifach faltbaren Windschottvorrichtungen 1 einsetzen.

In der Fig. 3 ist eine erste Ausführungsform eines erfindungsgemäßen Aufrichtmittels 20 wiedergegeben, mit welchem der Rahmen 10 aus der auf dem Unterrahmen 2 aufliegenden Ablageposition hochgeschwenkt werden kann. Der Rahmen 10 kann dabei in der Ablageposition vollständig oder auch nur teilweise auf dem Unterrahmen 2 aufliegen. Es ist dabei auch möglich, dass der Rahmen 10 nicht auf dem oder den Rahmenelementen 3, 4, 5 des Rahmens 2, sondern lediglich auf der Flachmaterialbahn 6 aufliegt. Zum Hochschwenken greift der Fahrer oder der Beifahrer schräg nach hinten, ergreift den Griffabschnitt 30 des Aufrichtmittels 20 und schwenkt den Rahmen 10 in eine aufrechte, im Wesentlichen senkrechte Gebrauchsposition, die in der Fig. 3 dargestellt ist. Bei dieser ersten Ausführungsform ist das Aufrichtmittel 20 als schräg verlaufender Steg ausgebildet, der das untere Querelement 13 des Rahmens 10 mit einem seiner Längselemente 14 verbindet. In der Fig. 3 sind zwei solcher Stege dargestellt, wobei der hinter dem Fahrer befindliche von dem Beifahrer ergriffen werden kann und der hinter dem Beifahrer befindliche von dem Fahrer. Ein sicheres Greifen wird beispielsweise dann gewährleistet, wenn das als Steg ausgebildete Aufrichtmittel 20 mit Abstand von der Flachmaterialbahn 16 (der Einfachheit halber nur angedeutet) des Rahmens 10 verläuft und somit der Griffabschnitt 30 von der Hand ganz umgriffen werden kann. Es ist auch möglich, dass die Flachmaterialbahn 16 an den Stegen anliegt und durch die greifende Hand leicht weggedrückt werden muss.

Die beiden als Stege ausgebildeten starren Aufrichtmittel 20, die vorliegend allein aus den Griffabschnitten 30 bestehen, verlaufen vorliegend in einer Ebene parallel und mit geringem Abstand zur im Rahmen eingespannten Flachmaterialbahn 16.

Es ist allerdings auch möglich, dass die Flachmaterialbahn 16 im Rahmen 10 dreigeteilt ausgebildet ist, d.h. in den Flächen zwischen den Aufrichtmitteln 20 und den nahe gelegenen Eckelementen 15 ist jeweils ein abgegrenzter kleiner Teil der Flachmaterialbahn eingesetzt, während die zwischen den beiden Aufrichtmitteln 20 liegende Fläche von einem eigenen, großen Stück der Flachmaterialbahn 16 eingenommen wird.

In einer weiteren, nicht dargestellten Variante ist keine Flachmaterialbahn 16 zwischen dem jeweiligen Aufrichtmittel 20 und dem benachbarten Eckelement 15 vorgesehen. Die freie Fläche ist dementsprechend klein zu halten, damit kein unangenehmer Luftzug durch diese Fläche hindurch entsteht.

Je nach Ausführungsform können die als Stege ausgebildeten Aufrichtmittel 20 sich vollständig innerhalb des Querschnitts des Rahmens 10 erstrecken (wie in Fig. 3 dargestellt) oder leicht über die Rahmenelemente 13, 14, 15 des Rahmens 10 hinaus in Richtung der Fahrerseite überstehen. Der Durchmesser der Aufrichtmittel 20 kann kleiner sein als der Durchmesser der übrigen Elemente 13, 14, 15 des Rahmens 10.

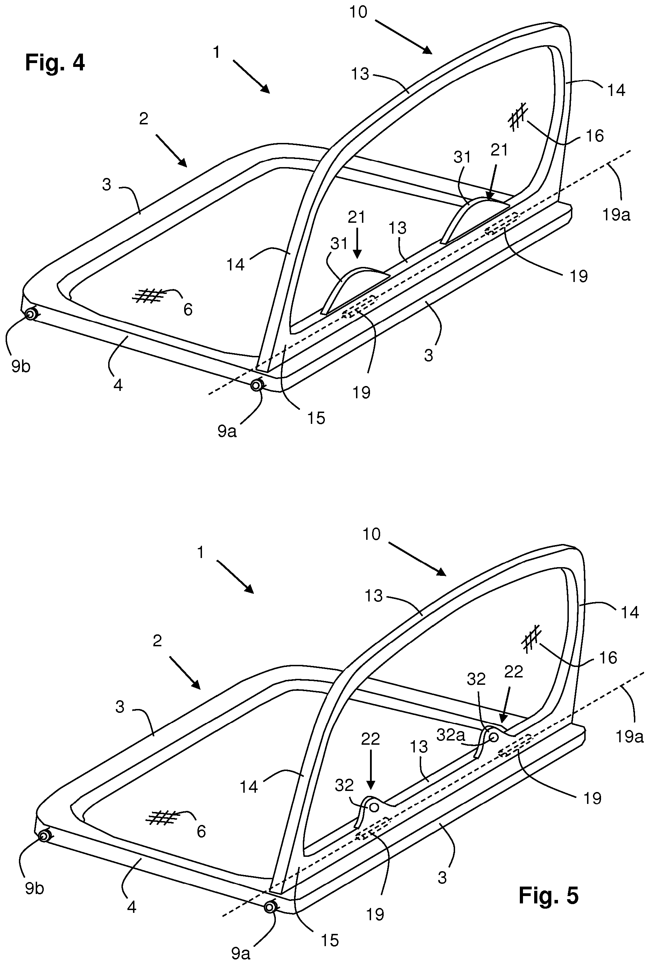

Bei der zweiten Ausführungsform gemäß der Fig. 4 sind vorliegend zwei starre Aufrichtmittel 21 mit vollflächigen, gebogenen und zu hintergreifenden Griffabschnitten 31 am unteren Querelement 14 des Rahmens 10 vorgesehen. Wie bei der Ausführungsform gemäß der Fig. 3 sind die Griffabschnitte 31 die einzigen Elemente der Aufrichtmittel 21. Es ist selbstverständlich möglich, dass zusätzlich oder alternativ auch am oberen Querelement 13 derartige Aufrichtmittel 21 angeordnet sind. Die Aufrichtmittel 21 können beispielsweise angenietet oder angespritzt sein. Sie verlaufen in einer Ebene parallel zur Flachmaterialbahn 16, entweder mit geringem Abstand zu dieser oder an dieser anliegend. Die Aufrichtmittel 21 sind in der Seitenansicht des Rahmens 10 gesehen von diesem verdeckt.

Die dritte, in der Fig. 5 dargestellte Ausführungsform ist der zweiten (Fig. 4) dahingehend ähnlich, dass auch hier zwei starre Aufrichtmittel 22 an dem unteren Querelement 13 angeordnet sind, beispielsweise wiederum angenietet oder angespritzt. Der Unterschied zu der Ausführungsform der Fig. 4 besteht darin, dass die Griffabschnitte 32 der Aufrichtmittel 22 Durchgangsöffnungen 32a umfassen, die entweder permanent offen ausgebildet sind oder mit einem gegen eine Federkraft verschieblichen oder verschenkbaren Deckel o.ä. (nicht dargestellt) verschlossen sind. Der Bediener durchgreift eine Durchgangsöffnung 32a mit beispielsweise zwei oder mehr Fingern, vorteilhafterweise mit nach oben offener Handfläche, um die Hebelwirkung auf den Rahmen 10 zu erhöhen. Es ist zudem möglich, dass in einer permanent offenen Durchgangsöffnung 32a ein schmaler Steg vorgesehen ist, der diese Fläche teilt und einen weiteren Griffabschnitt darstellt (nicht dargestellt). Gemäß einer weiteren Alternative kann statt der Durchgangsöffnung 32a auch eine Mulde in dem Griffabschnitt 32 vorgesehen sein, in welche die Fingerkuppen eingreifen können.

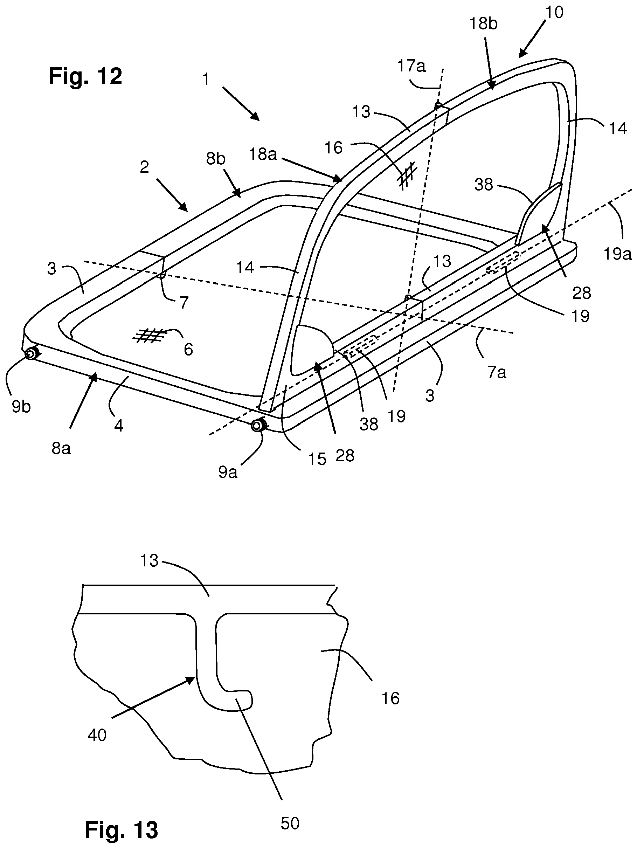

Der Außenrand der Flachmaterialbahn 16 im Rahmen 10 kann bei der dritten Ausführungsform (Fig. 5) nahe entlang der Außenkontur der Aufrichtmittel 21 bzw. 22 verlaufen, so dass der Bediener beim Durchgreifen einer Durchgangsöffnung 32a auch durch die Ebene der Flachmaterialbahn 16 hindurch greift. Alternativ verläuft die Flachmaterialbahn 16 hinter den Aufrichtmitteln 22 vollständig in den Elementen 13, 14, 15, so dass die die Durchgangsöffnung 2a durchgreifenden Finger an der Flachmaterialbahn 16 anliegen. Nach einer nicht dargestellten Ausführungsform der Erfindung können starre Aufrichtmittel 21, 22, welche am unteren Querelement 13 des Rahmens 10 vorgesehen sind, wie die der Figuren 4 und 5, auch hakenförmig ausgebildet sein oder zumindest einen hakenförmigen Griffabschnitt oder einen hakenförmigen Fortsatz aufweisen. Diese Ausführung ähnelt dann der in Fig. 13 dargestellten und kann ebenso wie diese als Kleiderhaken oder als Haken zur Aufnahme weiterer Teile dienen.

Eine weitere nicht dargestellte Abwandlung sieht vor, dass starre Aufrichtmittel 21, 22, welche am unteren Querelement 13 des Rahmens 10 vorgesehen sind, sich in Gebrauchsstellung des Rahmens 10 nicht wie in Fig. 4 und 5 nach oben, sondern vielmehr nach unten erstrecken, also über die Kontur des Rahmens 10 nach unten bzw. in Ablageposition nach vorne zu den Vordersitzen hin hinausragen.

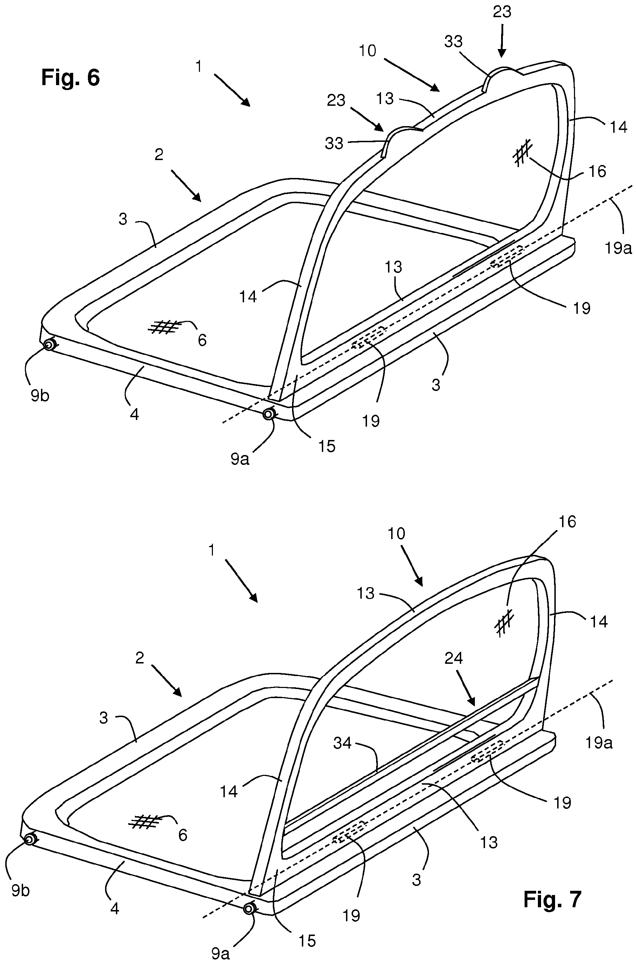

Bei der vierten Ausführungsform, wiedergegeben in Fig. 6, sind starre Aufrichtmittel 23, die aus vollflächigen Griffabschnitten 33 bestehen, an der Außenseite des oberen Querelements 13 des Rahmens 10 - alternativ oder zusätzlich auch an den Außenseiten der Längselemente 14 (nicht dargestellt) - angeordnet. Die Aufrichtmittel 21 gemäß der Fig. 4 sind also bei der Ausführungsform gemäß der Fig. 6 nach außen verlagert. Wenn der Rahmen 10 zudem kleiner ist als der Unterrahmen 2 und somit je nach Ausgestaltung der Windschottvorrichtung 1 durch den Unterrahmen 2 durchtauchen könnte (bei zusammenfallenden Achsen 7, 17), können die Aufrichtmittel 23 am Rahmen 10 auch eine Abstützfunktion am Unterrahmen 2 übernehmen, wenn der Rahmen 10 auf den Unterrahmen 2 abgelegt wird.

Die Aufrichtmittel 21 (Fig. 4) und 23 (Fig. 6) müssen nicht vollflächig ausgebildet sein, sondern können auch als herkömmliche Griffe gestaltet sein.

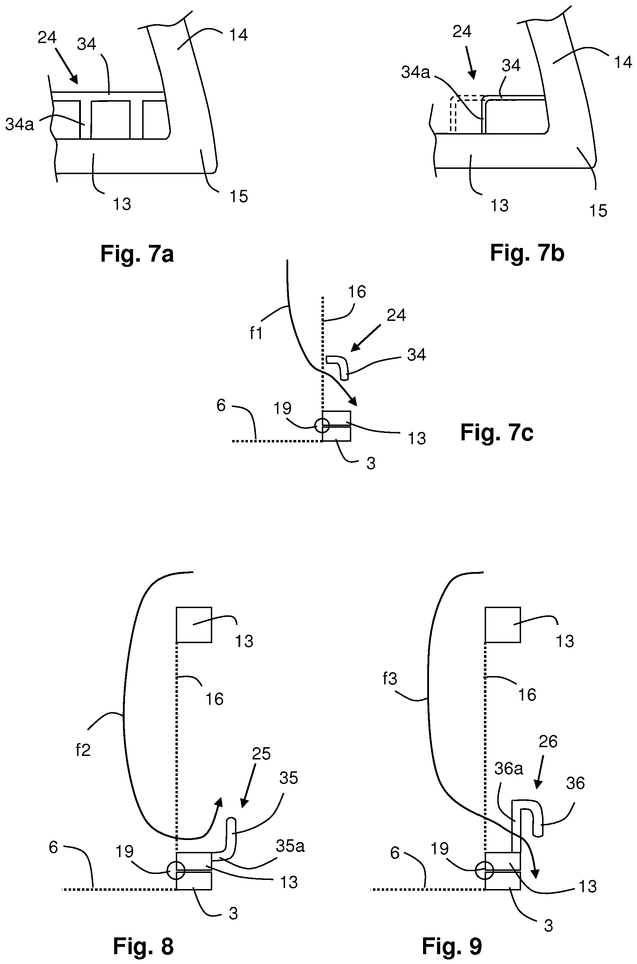

In der Fig. 7 ist eine weitere Ausführungsform der Erfindung dargestellt, bei der das erfindungsgemäße starre Aufrichtmittel 24 einen als Griffleiste ausgebildeten Griffabschnitt 34 umfasst, der im Wesentlichen parallel zum unteren Querelement 13 und innerhalb des Rahmens 10 verläuft. Die Griffleiste bzw. der Griffabschnitt 34 kann hierbei beispielsweise von einem Längselement 14 des Rahmens 10 zum anderen Längselement 14 verlaufen. Es ist auch, s. Fig. 7a, möglich, dass kurze Stützstreben 34a den Griffabschnitt 34 mit dem unteren Querelement 13 des Rahmens 10 verbinden. Auch sind Griffabschnitte 34 Teil der Erfindung, die von einem Längselement 14 im Wesentlichen parallel zum Querelement 13 und dann abgewinkelt mittels einer Stützstrebe 34a zu diesem Querelement 13 hin verlaufen, s. Fig. 7b. Diese Variante ähnelt dann derjenigen der Fig. 3.

Der Querschnitt des als Griffleiste ausgebildeten Griffabschnitts 34 kann unterschiedliche Formen aufweisen. In Fig. 7c ist eine Variante skizziert, bei welcher der Griffabschnitt 34 des Aufrichtmittels 24 von dem Rahmen 10 weg (in Richtung der Fahrzeugvorderseite) abwärts gebogen ausgebildet ist und als Luftleitkante für durch die Flachmaterialbahn 16 gelangende Luft dient, s. Pfeil f1. Damit lassen sich auch geringvolumige Luftströme umleiten, so dass höchsten Komfortansprüchen von Fahrer und Beifahrer Rechnung getragen werden kann. Eine nicht-erfindungsgemäße Variante einer in einem starren Aufrichtmittel 25 ausgebildeten Luftleitkante ist in Fig. 8 dargestellt. Hier verläuft das Aufrichtmittel 25 ebenfalls parallel zum unteren Querelement 13 über dessen gesamte Länge, ist aber an diesem befestigt. Im Gegensatz zu der Ausführung der Fig. 7 weist das Aufrichtmittel 25 in der Seitenansicht gesehen einen das Querelement 13 überragenden und von diesem weg weisenden Querabschnitt 35a auf, der dann in einen leistenartigen Griffabschnitt 35 übergeht, der nach oben gebogen ist. Das Aufrichtmittel 25 ist also - im Gegensatz zu den bisher vorgestellten Aufrichtmitteln - nicht innerhalb des Rahmens 10 angeordnet, sondern ragt nach vorne (in Richtung der Fahrzeugvorderseite) über. Aufgrund der nach oben gebogenen Ausbildung des Griffabschnitts 35 wird durch die Flachmaterialbahn 16 gelangende Luft nach oben geleitet, s. Pfeil f2.

In der Variante gemäß der Fig. 9 ist der griffleistenartige Griffabschnitt 36 des starren Aufrichtmittels 26 nach unten gebogen ausgebildet, wobei - im Gegensatz zu der Fig. 8 der Griffabschnitt 36 mit mehreren schmalen Stützstreben 36a mit dem unteren Querelement 13 verbunden ist, ähnlich wie die Stützstreben 34a in Fig. 6a. Die Luft wird zwischen den Stützstreben 36a und dem Griffabschnitt 36 nach unten geleitet, s. Pfeil f3.

Erfindungsgemäß verlaufen die beim Aufrichten zu greifenden Griffabschnitte 30-36 der starren Aufrichtmittel 20-26 gemäß der Fig. 3 -9 in einem Winkel von maximal bis 10°zur im Rahmen 10 eingespannten Flachmaterialbahn 16. Bei den in den Figuren dargestellten Ausführungsformen beträgt der besagte Winkel jeweils 0°. Es ist aber auch möglich, dass die Griffabschnitte 30-36 leicht, insbesondere zur Fahrerseite hin, bis zu 10° geneigt sind.

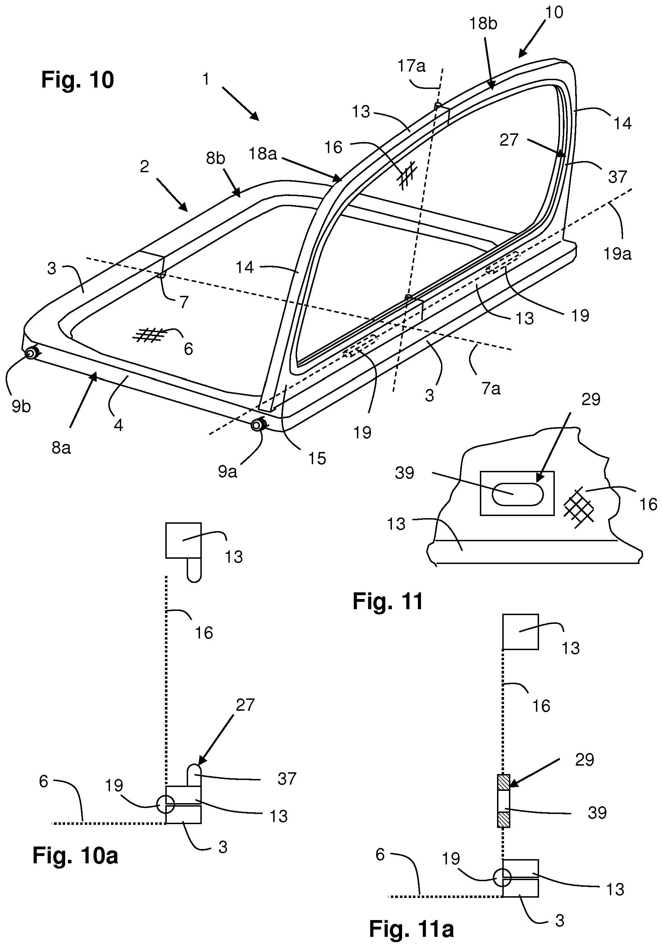

Eine Ausführung der Erfindung mit einem entlang der Rahmenelemente 13, 14, 15 umlaufenden Aufrichtmittel 27 ist in Fig. 10 gezeigt. Das Aufrichtmittel 27 ist dabei vollständig um den gesamten Rahmen 10 umlaufend gezeigt, es ist natürlich aber auch möglich, dass das Aufrichtmittel 27 sich nur über einen Teilbereich des Rahmens 10 erstreckt bzw. nur entlang eines Teiles der Rahmenelemente 3, 4, 5, 13, 14, 15 umläuft. Der Griffbereich 37 ist vorliegend ebenfalls vollständig um den Rahmen umlaufend ausgebildet, so dass aufgrund des sehr großen Griffbereichs ein sehr hoher Bedienkomfort erreicht wird.

Wie der Figur 10a entnehmbar, ist dabei das Aufrichtmittel 27 in der Seitenansicht vollständig vom Rahmen 10 verdeckt. Dadurch, dass das Aufrichtmittel 27 keine hervorstehenden Teile beinhaltet, ist es beim Zusammenfalten und Verstauen durch den Rahmen 10 geschützt und es kann zugleich ein sehr geringes Packmaß erreicht werden.

Figuren 11 und 11 a zeigen eine Variante, bei welcher das Aufrichtmittel 29 direkt an der Flachmaterialbahn 16 befestigt ist. Das Aufrichtmittel 29 liegt somit in derselben Ebene wie die im Rahmen 10 eingespannte Flachmaterialbahn. Der Griffbereich 39 ist bei dieser Ausführung durch eine Ausnehmung bzw. eine Durchgangsöffnung gebildet, in welche der Bediener eingreifen kann. Ähnlich wie bei Fig. 5 beschrieben, kann die Durchgangsöffnung entweder permanent offen ausgebildet sein oder mit einem federbelasteten Deckel o.ä. (nicht dargestellt) verschlossen sein. Ebenso ist ein zusätzlicher Steg oder eine Mulde, wie bei Fig. 5 beschrieben, möglich. Um die Belastung der Flachmaterialbahn 16 durch die Betätigungskräfte zu reduzieren, können beispielsweise Verstärkungsstreifen in der Flachmaterialbahn 16 vorgesehen werden.

Figur 12 zeigt wiederum eine Ausführung, bei welcher das Aufrichtmittel 28 Rahmenelemente 13, 14, 15 des Rahmens 10, vorliegend ein Querelement 13 und ein Längselement 14, miteinander verbindet. Der Griffabschnitt 38 des Aufrichtmittels 28 verläuft hier mit Abstand zu der Ebene der Flachmaterialbahn 16, so dass der Bediener den Griffabschnitt bequem erreichen und umgreifen kann. Wie der Figur 12 entnehmbar, kann dabei auch vorgesehen sein, dass das Aufrichtmittel 28 im Bereich seines Griffabschnitts 38, der den Rahmenelementen 13, 14 abgewandt ist, noch aus der Ebene parallel zu der der Flachmaterialbahn herausgebogen ist, um einen noch größeren Bedienkomfort zu erreichen. Das Aufrichtmittel 28 kann jedoch auch plan ausgeführt sein und sich vollständig in einer Ebene parallel zu der der Flachmaterialbahn 16 erstrecken. Weiterhin kann auch bei dieser Ausführung das Aufrichtmittel 28 einteilig mit einem der Rahmenelemente 13, 14, 15 ausgeführt sein.

Nach einer nicht dargestellten Abwandlung der Ausführung nach Figur 12 kann ein Aufrichtmittel 28, das zwei Rahmenelemente 13, 14, 15 des Rahmens 10 miteinander verbindet, auch zweiteilig ausgeführt sein. Eine derartige Ausführung ist vorteilhaft einsetzbar bei einem Rahmen10, bei dem zwei Rahmenelemente 13, 14, 15, beispielsweise ein Querelement 13 und ein Längselement 14, gelenkig miteinander verbunden sind, um eine weitere Klappung der Windschottvorrichtung zu ermöglichen. Dabei ist ein Teil des Aufrichtmittels 28 starr an dem Querelement 13 und der andere Teil des Aufrichtmittels 28 starr an dem Längselement 14 angeordnet. Die beiden Teile des Aufrichtmittels 28 greifen dabei schwenkbeweglich ineinander. Dabei kann lediglich ein Ineinanderschwenken der beiden Teile oder auch eine Kulissenführung des einen Teils in dem anderen vorgesehen sein.

Eine weitere Variante ist in Figur 13 gezeigt. Der Griffbereich 50 des Aufrichtmittels 40 ist dabei hakenförmig ausgeführt, so dass das Aufrichtmittel 40 zugleich als Kleiderhaken dienen kann. Das Aufrichtmittel 40 ist daher an dem oberen Querelement 13 des Rahmens 10 angeordnet, welches der Klappachse 19a abgewandt ist. Auch hier befindet sich das Aufrichtmittel 40 in der Seitenansicht innerhalb der Kontur des Rahmens 10, um es vor Beschädigungen zu schützen. Es kann jedoch für eine bessere Ergonomie vorgesehen sein, dass der Griffbereich 50 wiederum etwas aus der Ebene, welche durch den Rahmen 10 aufgespannt wird, herausgebogen ist.

Die Erfindung wurde anhand verschiedener Ausführungsformen näher erläutert, sie ist allerdings nicht auf diese Ausführungsformen beschränkt. Abwandlungen innerhalb der Ansprüche sind ohne Weiteres möglich. Statt der spiegelbildlichen Anordnung von Aufrichtmitteln (einerseits auf der Fahrer-, andererseits auf der Beifahrerseite) gemäß einiger der oben diskutierten Varianten kann auch lediglich nur ein Aufrichtmittel, beispielsweise auf der Seite des Beifahrers, vorgesehen sein, das dann vom Fahrer zu bedienen ist, der sich hierzu nach hinten umdreht und schräg nach hinten auf das einzige Aufrichtmittel Zugriff hat.

### Bezuaszeichenliste

- 1: Windschottvorrichtung
- 2: Unterrahmen
- 3: Querelement
- 4: Längselement
- 5: Eckelement
- 6: Flachmaterialbahn
- 7: Schwenkscharnier
- 7a: Schwenkachse
- 8a, 8b: Teilrahmen des ersten Rahmens
- 9a, 9b: Fixiereinrichtungen
- 10: Rahmen
- 13: Querelement
- 14: Längselement
- 15: Eckelement
- 16: Flachmaterialbahn
- 17: Schwenkscharnier
- 17a: Schwenkachse
- 18a, 18b: Teilrahmen des zweiten Rahmens
- 19: Klappscharnier
- 19a: Klappachse
- 20-29, 40: Aufrichtmittel
- 30-39, 50: Griffabschnitt
- 32a: Durchgangsöffnung
- 34a: Stützstrebe
- 35a: Querabschnitt
- 36a: Stützstrebe
- 77: Gürtellinie
- 88: Rücksitze

## Patentansprüche

1. Windschottvorrichtung für ein Personenkraftfahrzeug zum Windschutz von im Fahrzeug sitzenden Personen, mit wenigstens einem Rahmen (10), welcher aus wenigstens einem Rahmenelement (13, 14, 15) sowie einer in dem Rahmen (10) eingespannten Flachmaterialbahn (16) aufgebaut ist, und welcher bei im Fahrzeug eingebauter Windschottvorrichtung (1) aus einer Ablagestellung, in welcher der Rahmen (10) sich im Wesentlichen parallel zu einer Gürtellinie (77) des Personenkraftfahrzeugs erstreckt, in eine Gebrauchsstellung, in welcher der Rahmen (10) sich im Wesentlichen aufrecht im Bereich der Vordersitze des Personenkraftfahrzeugs erstreckt, schwenkbar ist, und mit mindestens einem Aufrichtmittel (20-24, 26-29, 40) zum Aufrichten des Rahmens (10) aus seiner Ablagestellung in seine Gebrauchsstellung, wobei das mindestens eine Aufrichtmittel (20-24, 26-29, 40) starr mit dem Rahmen (10) verbunden ist und einen beim Aufrichten zu greifenden Griffabschnitt (30-34, 36-39, 50) aufweist, **dadurch gekennzeichnet, dass** das Aufrichtmittel (20-24, 26-29, 40) innerhalb des Rahmens (10) angeordnet ist und dass der Griffabschnitt (30-34, 36-39, 50) in einem Winkel von maximal bis 10° zur im Rahmen (10) eingespannten Flachmaterialbahn (16) verläuft, wobei das mindestens eine Aufrichtmittel (20-24, 26-29, 40) in der Seitenansicht des Rahmens (10) zumindest teilweise oder vollständig von dem Rahmen (10) verdeckt ist.

2. Windschottvorrichtung nach Anspruch 1, **dadurch gekennzeichnet, dass** die Windschottvorrichtung weiterhin einen Unterrahmen (2) aufweist, welcher aus wenigstens einem Rahmenelement (3, 4, 5) und einer in dem Unterrahmen (2) eingespannten Flachmaterialbahn (16) aufgebaut ist, wobei der Rahmen (10) schwenkbar mit dem Unterrahmen (2) verbunden ist.

3. Windschottvorrichtung nach einem der vorhergehenden Ansprüche, **dadurch gekennzeichnet, dass** das wenigstens eine Aufrichtmittel (20-24, 26-29, 40) durch direkten Zug in Richtung der Gebrauchsstellung des Rahmens (10) betätigbar ist.

4. Windschottvorrichtung nach einem der vorhergehenden Ansprüche, **dadurch gekennzeichnet, dass** das mindestens eine Aufrichtmittel (29) starr mit der Flachmaterialbahn (16) des Rahmens (10) verbunden ist.

5. Windschottvorrichtung nach einem der vorhergehenden Ansprüche, **dadurch gekennzeichnet, dass** sich der besagte Griffabschnitt (30-34, 36-39, 50) größtenteils in einer Ebene erstreckt, die parallel zu der Ebene verläuft, in der sich die im Rahmen (10) eingespannte Flachmaterialbahn (16) erstreckt.

6. Windschottvorrichtung nach einem der vorhergehenden Ansprüche, **dadurch gekennzeichnet, dass** das mindestens eine Aufrichtmittel (20-24, 26-29) an einem Querelement (13) des Rahmens (10) angeordnet ist, wobei das Querelement (13) sich in y-Richtung des Fahrzeugs erstreckt, und wobei an dem Querelement (13) auch das Schwenkscharnier (19) von Unterrahmen und Rahmen (2, 10) angeordnet ist.

7. Windschottvorrichtung nach einem der vorhergehenden Ansprüche, **dadurch gekennzeichnet, dass** das mindestens eine Aufrichtmittel eine Aussparung in einem Querelement oder Längselement (13, 14) des Rahmens (10) umfasst, in welche eine Bedienperson mit den Fingern eingreifen und den Rahmen (10) aus der abgelegten Position aufrichten, bzw. hoch schwenken kann.

8. Windschottvorrichtung nach einem der vorhergehenden Ansprüche, **dadurch gekennzeichnet, dass** das mindestens eine Aufrichtmittel (20, 28) ein Querelement (13) des Rahmens (10), das sich in y-Richtung des Fahrzeugs erstreckt, mit einem Längselement (14) des Rahmens (10), das sich in Ablagestellung des Rahmens (10) in x-Fahrzeugrichtung erstreckt, verbindet.

9. Windschottvorrichtung nach einem der vorhergehenden Ansprüche, **dadurch gekennzeichnet, dass** das mindestens eine Aufrichtmittel (24) sich von einem Längselement (14) des Rahmens (10) zum anderen Längselement (14) erstreckt.

10. Windschottvorrichtung nach einem der vorhergehenden Ansprüche, **dadurch gekennzeichnet, dass** das mindestens eine Aufrichtmittel (20, 24) als Steg ausgebildet ist, welcher zwei Rahmenelemente (13, 14, 15) des Rahmens (10) miteinander verbindet.

11. Windschottvorrichtung nach einem der vorhergehenden Ansprüche, **dadurch gekennzeichnet, dass** das wenigstens eine Aufrichtmittel (27) entlang des wenigstens einen Rahmenelements (13, 14, 15) um den Rahmen (10) umlaufend ausgebildet ist.

12. Windschottvorrichtung nach einem der vorhergehenden Ansprüche, **dadurch gekennzeichnet, dass** das mindestens eine Aufrichtmittel (24, 26-28) einen Griffabschnitt (34, 36-38) aufweist, der in Gebrauchsstellung des Rahmens (10) aufwärts oder abwärts gebogen ausgebildet ist.

13. Windschottvorrichtung nach dem vorhergehenden Anspruch, **dadurch gekennzeichnet, dass** der gebogene Griffabschnitt (34, 36, 37) als Luftleiteinrichtung dient.

14. Windschottvorrichtung nach dem vorhergehenden Anspruch, **dadurch gekennzeichnet, dass** das mindestens eine Aufrichtmittel (40) und/oder der Griffabschnitt (50) des mindestens einen Aufrichtmittels (40) hakenförmig ausgebildet ist.

## Claims

1. A wind deflecting device for a passenger car for protecting persons sitting in the car from wind, having at least one frame (10) comprising at least one frame element (13, 14, 15) and a flat material web (16) fixed in the frame (10), and, when the wind deflecting device (1) is installed in the vehicle, being pivotable from a storage position in which the frame (10) extends substantially parallel to a beltline (77) of the passenger car into a use position in which the frame (10) extends substantially upright in the region of the front seats of the passenger car when the wind deflecting device (1) is installed in the vehicle, and having at least one raising means (20-24, 26-29, 40) for raising the frame (10) from the storage position thereof into the use position thereof, the at least one raising means (20-24, 26-29, 40) being rigidly connected to the frame (10) and comprising a handle segment (30-34, 36-39, 50) for gripping while raising, **characterized in that** the raising means (20-24, 26-29, 40) is disposed within the frame (10) and that the handle segment (30-34, 36-39, 50) runs at an angle of no greater than 10° to the flat material web (16) fixed in the frame (10), wherein the at least one raising means (20-24, 26-29, 40) is covered at least partially or completely by the frame (10) in the side view of the frame (10).

2. The wind deflecting device according to claim 1, **characterized in that** the wind deflecting device further comprises a subframe (2) being composed of at least one frame element (3, 4, 5) and a flat material web (16) fixed in the subframe (2), wherein the frame (10) is pivotally connected to the subframe (2).

3. The wind deflecting device according to any one of the preceding claims, **characterized in that** the at least one raising means (20-24, 26-29, 40) can be actuated by directly pulling in the direction of the use position of the frame (10).

4. The wind deflecting device according to any one of the preceding claims, **characterized in that** the at least one raising means (29) is rigidly connected to the flat material web (16) of the frame (10).

5. The wind deflecting device according to any one of the preceding claims, **characterized in that** the handle segment (30-34, 36-39, 50) extends largely in a plane running parallel to the plane in which the flat material web (16) fixed in the frame (10) extends.

6. The wind deflecting device according to any one of the preceding claims, **characterized in that** the at least one raising means (20-24, 26-29) is disposed on a transverse element (13) of the frame (10), wherein the transverse element (13) extends in the Y-direction of the vehicle, and wherein the pivot hinge (19) of the subframe and the frame (2, 10) is also disposed on the transverse element (13).

7. The wind deflecting device according to any one of the preceding claims, **characterized in that** the at least one raising means comprises a cutout in a transverse element or a longitudinal element (13, 14) of the frame (10) into which an operating person can reach with the fingers and can raise or pivot up the frame (10) from the stored position.

8. The wind deflecting device according to any one of the preceding claims, **characterized in that** the at least one raising means (20, 28) connects a transverse element (13) of the frame (10) extending in the Y-direction of the vehicle to a longitudinal element (14) of the frame (10) extending in the X-direction of the vehicle in the stored position of the frame (10).

9. The wind deflecting device according to any one of the preceding claims, **characterized in that** the at least one raising means (24) extends from one longitudinal element (14) of the frame (10) to the other longitudinal element (14).

10. The wind deflecting device according to any one of the preceding claims, **characterized in that** the at least one raising means (20, 24) is implemented as a bar connecting two frame elements (13, 14, 15) of the frame (10) to each other.

11. The wind deflecting device according to any one of the preceding claims, **characterized in that** the at least one raising means (27) is implemented peripherally around the frame (10) along the at least one frame element (13, 14, 15).

12. The wind deflecting device according to any one of the preceding claims, **characterized in that** the at least one raising means (24, 26-28) comprises a handle segment (34, 36-38) implemented bent upward or downward in the use position of the frame (10).

13. The wind deflecting device according to the preceding claim, **characterized in that** the bent handle segment (34, 36, 37) acts as an air-guiding device.

14. The wind deflecting device according to the preceding claim, **characterized in that** the at least one raising means (40) and/or the handle segment (50) of the at least one raising means (40) is implemented as a hook shape.

## Revendications

1. Dispositif coupe-vent pour une voiture particulière pour la protection contre le vent des personnes assises dans le véhicule, avec au moins un cadre (10), lequel est constitué d'au moins un élément de cadre (13, 14, 15) ainsi que d'une bande de matériau plat (16) tendue dans le cadre (10), et lequel est pivotant à l'état du dispositif coupe-vent (1) incorporé dans le véhicule depuis une position de rangement, dans laquelle le cadre (10) s'étend de manière essentiellement parallèle à une ligne de ceinture (77) de la voiture particulière, dans une position d'utilisation, dans laquelle le cadre (10) s'étend de manière essentiellement verticale dans la zone des sièges avant de la voiture particulière, et avec au moins un moyen de redressement (20-24, 26-29, 40) pour redresser le cadre (10) depuis sa position de rangement vers sa position d'utilisation, sachant que l'au moins un moyen de redressement (20-24, 26-29, 40) est relié de manière rigide avec le cadre (10) et comporte une section de préhension (30-34, 36-39, 50) à saisir durant le redressement, **caractérisé en ce que** le moyen de redressement (20-24, 26-29, 40) est disposé au sein du cadre (10) et que la section de préhension (30-34, 36-39, 50) s'étend dans un angle maximal de 10° par rapport à la bande de matériau plat (16) tendue dans le cadre (10), sachant que l'au moins un moyen de redressement (20-24, 26-29, 40) est au moins partiellement ou intégralement caché par le cadre (10) en vue latérale du cadre (10).

2. Dispositif coupe-vent selon la revendication 1, **caractérisé en ce que** le dispositif coupe-vent comporte en outre un cadre inférieur (2), lequel est constitué d'au moins un élément de cadre (3, 4, 5) et d'une bande de matériau plat (16) tendue dans le cadre inférieur (2), sachant que le cadre (10) est relié de manière pivotante avec le cadre inférieur (2).

3. Dispositif coupe-vent selon l'une des revendications précédentes, **caractérisé en ce que** l'au moins un moyen de redressement (20-24, 26-29, 40) est actionnable par traction directe dans la direction de la position d'utilisation du cadre (10).

4. Dispositif coupe-vent selon l'une des revendications précédentes, **caractérisé en ce que** l'au moins un moyen de redressement (29) est rigidement relié avec la bande de matériau plat (16) du cadre (10).

5. Dispositif coupe-vent selon l'une des revendications précédentes, **caractérisé en ce que** ladite section de préhension (30-34, 36-39, 50) s'étend en majeure partie dans un plan qui s'étend parallèlement au plan dans lequel s'étend la bande de matériau plat (16) tendue dans le cadre (10).

6. Dispositif coupe-vent selon l'une des revendications précédentes, **caractérisé en ce que** l'au moins un moyen de redressement (20-24, 26-29) est disposé sur un élément transversal (13) du cadre (10), sachant que l'élément transversal (13) s'étend dans le sens y du véhicule, et sachant que la charnière pivotante (19) du cadre inférieur et du cadre (2, 10) est également disposée sur l'élément transversal (13).

7. Dispositif coupe-vent selon l'une des revendications précédentes, **caractérisé en ce que** l'au moins un moyen de redressement comporte un évidement dans un élément transversal ou un élément longitudinal (13,14) du cadre (10), dans lequel une personne de commande introduit les doigts et peut redresser ou relever le cadre (10) depuis la position de rangement.

8. Dispositif coupe-vent selon l'une des revendications précédentes, **caractérisé en ce que** l'au moins un moyen de redressement (20, 28) relie un élément transversal (13) du cadre (10), qui s'étend dans le sens y du véhicule, avec un élément longitudinal (14) du cadre (10), qui s'étend dans le sens x du véhicule dans la position de rangement du cadre (10).

9. Dispositif coupe-vent selon l'une des revendications précédentes, **caractérisé en ce que** l'au moins un moyen de redressement (24) s'étend d'un élément longitudinal (14) du cadre (10) à l'autre élément longitudinal (14)

10. Dispositif coupe-vent selon l'une des revendications précédentes, **caractérisé en ce que** l'au moins un moyen de redressement (20, 24) se présente sous la forme d'une barrette, laquelle relie l'un à l'autre deux éléments de cadre (13, 14, 15) du cadre (10).

11. Dispositif coupe-vent selon l'une des revendications précédentes, **caractérisé en ce que** l'au moins un moyen de redressement (27) se présente sous une forme périphérique autour du cadre (10) le long de l'au moins un élément de cadre (13, 14, 15).

12. Dispositif coupe-vent selon l'une des revendications précédentes, **caractérisé en ce que** l'au moins un moyen de redressement (24, 26-28) comporte une section de préhension (34, 36-38), qui se présente sous une forme courbée vers le haut ou vers le bas dans la position d'utilisation du cadre (10).

13. Dispositif coupe-vent selon la revendication précédente, **caractérisé en ce que** la section de préhension (34, 36, 37) courbée sert de dispositif de guidage d'air.

14. Dispositif coupe-vent selon la revendication précédente, **caractérisé en ce que** l'au moins un moyen de redressement (40) et/ou la section de préhension (50) de l'au moins un moyen de redressement (40) se présente(nt) sous la forme d'un crochet.
